(19) Europäisches Patentamt
European Patent Office
Office européen des brevets

(11) Veröffentlichungsnummer: **0 154 164 B1**

(12) **EUROPÄISCHE PATENTSCHRIFT**

(45) Veröffentlichungstag der Patentschrift: **03.04.91**

(51) Int. Cl.[5]: **C08F 110/10**, C08F 2/38

(21) Anmeldenummer: **85101055.3**

(22) Anmeldetag: **01.02.85**

# (54) Verfahren zur Polymerisation von Isobutylen.

(30) Priorität: **10.02.84 DE 3404764**

(43) Veröffentlichungstag der Anmeldung:
**11.09.85 Patentblatt 85/37**

(45) Bekanntmachung des Hinweises auf die Patenterteilung:
**03.04.91 Patentblatt 91/14**

(84) Benannte Vertragsstaaten:
**BE DE FR GB NL**

(56) Entgegenhaltungen:
**EP-A- 0 025 530**
**EP-A- 0 036 974**
**FR-A- 1 447 837**

**CHEMICAL ABSTRACTS, Band 90, Nr. 6, Februar 1979, Columbus, OH (US); S. 13, Nr. 39452g**

(73) Patentinhaber: **BASF Aktiengesellschaft**
**Carl-Bosch-Strasse 38**
**W-6700 Ludwigshafen(DE)**

(72) Erfinder: **Mueller-Tamm, Heinz, Dr.**
**Ottweilerstr. 9**
**W-6700 Ludwigshafen(DE)**
Erfinder: **Kolk, Erich, Dr.**
**Im Rustengut 14**
**W-6702 Bad Duerkheim(DE)**
Erfinder: **Fauth, Karl-Heinz**
**Haardtblick 7**
**W-6719 Wattenheim(DE)**
Erfinder: **Mohr, Heinrich, Dr.**
**Carostr. 41**
**W-6710 Frankenthal(DE)**

EP 0 154 164 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polyisobutylen durch Polymerisation von Isobutylen in einer Polymerizationszone, in der die Siedetemperatur des inerten Lösungsmittels herrscht, in Gegenwart, jeweils bezogen auf das eingesetzte Isobutylen, von 0,01 bis 1,0 Gew.% Bortrifluoridkatalysator, der weniger als 0,3 Vol.% an Fremdbestandteilen enthält, eines Molekulargewichtsreglers, 30 bis 90 Gew.% des unter Reaktionsbedingungen inerten, niedrigsiedenden Lösungsmittels Ethylen und - gegebenenfalls - Polymerisationsbeschleuniger in Üblichen Mengen, wobei das bei der Polymerisation verdampfte Lösungsmittel kontinuierlich abgezogen, verflüssigt und im flüssigen Zustand erneut der Polymerisationszone zugefügt wird.

Bei derartigen Polymerisationsverfahren ist es erforderlich, in Gegenwart von Katalysatoren und Molekulargewichtsreglern sowie ggf. in Gegenwart von Polymerisationsbeschleunigern zu arbeiten, wobei letztere außer einer Erhöhung des Molekulargewichts des entstehenden Polymerisats eine Beschleunigung des Reaktionsablaufs und eine Verringerung der Katalysatormenge bewirken soll. Es ist ferner von technischem Interesse, die Polymerisation des Isobutylens bei festgelegten niedrigen Temperaturen durchzuführen, wo Vernetzungs- und Nebenreaktionen nicht vorhanden sind und gleichzeitig die Polymerisationswärme des Isobutylens abzuführen.

Es ist bekannt, die Polymerisation des Isobutylens zwischen 0 und -130 °C mit Friedel-Crafts-Verbindungen in Gegenwart von Molekulargewichtsreglern zu katalysieren und zur Beschleunigung der Reaktion in Anwesenheit von 10 bis 5000 Gew.-ppm, bezogen auf das Isobutylen, eines Polymerisationsbeschleunigers zu arbeiten und zur Abführung der Reaktionswärme in Gegenwart eines niedrigsiedenden inerten Lösungsmittels, das unter Reaktionsbedingungen verdampft, zu polymerisieren (vgl. US-Patente 3 129 205, 2 906 798, 4 391 959, DE-Patent 10 99 171 und EP-A-0 025530). Bei den bekannten Verfahren wird das verdampfte Lösungsmittel in einem Kompressor verdichtet und in den Polymerisationsprozeß zurückgeführt.

Es ist auch bereits bekannt, als Regler bei der Polymerisation von Isobutylen mit Aluminiumchlorid bei Temperaturen von -30 bis -100 °C 0,5 bis 10 Vol.% 2,4,4-Trimethylpenten-1 einzusetzen (vgl. SU-Patent 265 443). Bei diesem bekannten Topfverfahren wird mit Außenkühlung gearbeitet. Nachteilig ist hier die geringe Ausbeute von 96 Gew.%, die relativ lange Reaktionszeit und das niedere Molekulargewicht der erhaltenen Polyisobutylene.

Es hat sich gezeigt, daß eine empfindliche Störung des Polymerisationsablaufes die sogenannten Molekulargewichtsregler verursachen, die in Abhängigkeit von ihrer Konzentration im Reaktionsgemisch als Kettenabbrecher wirken. Neben einer Erniedrigung des Molekulargewichtes der entstehenden Isobutylenpolymerisate bewirken die Molekulargewichtsregler eine beträchtliche Erhöhung der Reaktionszeit und erfordern häufig auch eine Erhöhung des Katalysatorbedarfs (vgl. H Güterbock, Chemische Technologie der Kunststoffe, Polyisobutylen, Springer-Verlag, Berlin-Göttingen-Heidelberg, 1959, Seiten 82-91).

Um bei einer festgelegten Temperatur in einer gegebenen Apparatur sowohl hochmolekulare als auch niedrigmolekulare Polyisobutylene herzustellen, verwendet man Molekulargewichtsregler. Je höher die Konzentration des Molekulargewichtsreglers gewählt wird, desto niedriger ist das Molekulargewicht des entstehenden Isobutylenpolymerisates. Die Reaktionszeit wird jedoch beträchtlich erhöht. Will man daher in einer vorgegebenen Apparattur sowohl sehr hochmolekulare als auch niedrigmolekulare Polyisobutylene mit gleicher Raum-Zeit-Ausbeute herstellen, so muß man die Apparatur so auslegen, daß die längste notwendige Verweilzeit noch realisiert werden kann, obwohl man die hochmolekularen Polyisobutylene in einer wesentlich kleineren Apparatur herstellen könnte. Es war bisher nicht möglich, bei der Herstellung niedrigmolekularer Polyisobutylene die Reaktionszeit durch Erhöhung der Konzentration des Polymerisationsbeschleunigers zu senken. Der Nachteil der bekannten Verfahren liegt also darin, daß bei Verwendung von Molekulargewichtsreglern zur Senkung des Molekulargewichts des Polyisobutylens eine längere Reaktionszeit erforderlich ist, als bei der Herstellung hochmolekularer Polyisobutylene in Abwesenheit von Molekulargewichtsreglern.

Aufgabe der Erfindung war es, das eingangs beschriebene Verfahren zur Polymerisation von Isobutylen so zu verbessern, daß es nicht mehr mit den oben erwähnten Nachteilen belastet ist. Insbesondere soll ein unruhiger Polymerisationsverlauf, der sog. Spritzeffekt, vermieden werden.

Diese Aufgabe wird erfindungsgemäß dadurch gelöst, daß als Molekulargewichtsregler 0,001 bis 0,30 Gew.% 2,4,4-Trimethylpenten-1 eingesetzt wird, das weniger als 1,0, bevorzugt weniger als 0,5 Gew.% Fremdbestandteile enthält.

Verfahren zur Herstellung von Polyisobutylen durch Polymerisation von Isobutylen in einer Polymerisationszone sind seit geraumer Zeit bekannt und werden in der Monographie von H. Güterbock "Chemische Technologie der Kunststoffe in Einzeldarstellungen, Polyisobutylen", 1959, S. 77 bis 105, Springer-Verlag, Berlin/Götttingen/Heidelberg ausführlich beschrieben. Die erhaltenen Polyisobutylene sind bei Raumtemperatur, je nach Molekulargewicht, viskos-ölig bis gummielastisch, haben eine Dichte von 0,83 bis 0,93 g/cm³ und weisen die Formel:

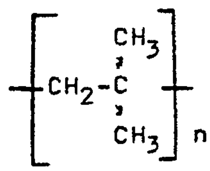

auf, wobei n = 2 bis 80 000.

Die Polymerisation des Isobutylens erfolgt nach bekannten Verfahren bei Reaktionstemperaturen zwischen 0 und -130° C, vorzugsweise arbeitet man bei Temperaturen zwischen -50° C und -110° C. Das Verfahren arbeitet drucklos.

Die Polymerisation des Isobutylens wird in Gegenwart von 0,01 bis 1,0, bevorzugt 0,08 bis 0,2 Gew.%, bezogen auf das eingesetzte Isobutylen, Bortrifluoridkatalysator vorgenommen. Es wird ein Bortrifluoridkatalysator verwendet, der weniger als 0,3 Volumenprozent an Fremdbestandteilen enthält und insbesondere weitgehend frei von Siliziumtetrafluorid ist. Ein derartiges Verfahren ist aus dem US-Patent 4 391 959 bzw. EP-Patent 36 974 bekannt.

Die mit reinem Bortrifluorid katalysierte Polymerisation wird üblicherweise in Gegenwart von bis zu 10 Gew.%, bezogen auf das eingesetzte Isobutylen, eines Molekulargewichtsreglers vorgenommen, der bei einer gegebenen Temperatur das Molekulargewicht des Polyisobutylens gezielt einstellen kann. Derartige Molekulargewichtsregler sind beispielsweise Verbindungen wie n-Buten, Diisobutylen, Mercaptone, Sulfide oder Polysulfide (vgl. EP-A-0 036 974).

Die Polymerisation des Isobutylens wird in Gegenwart von 30 bis 90 Gew.%, bezogen auf das eingesetzte Isobutylen, eines unter Reaktionsbedingungen inerten, niedrigsiedenden Lösungsmittels ausgeführt. Das wegen der günstigen Lage ihres Siedepunktes geeignete Lösungsmittel ist Ethylen, da durch Verdampfen desselben unter Reaktionsbedingungen die Polymerisationswärme des Isobutylens auf einfache Weise abgeführt werden kann. Bei Verwendung des obengenannten Lösungsmittels, das gleichzeitig Kühlmittel ist, wird das Isobutylen bei Siedetemperatur des inerten Lösungsmittels polymerisiert. Im Falle des Ethylens beträgt die Polymerisationstemperatur ca. -104° C (vgl. EP-A-0 025 530 und EP-A-0 036 974).

Die Polymerisation des Isobutylens wird ggf. in Gegenwart von 10 bis 5000, bevorzugt 100 bis 500 Gew.-ppm, bezogen auf das eingesetzte Isobutylen, eines Polymerisationsbeschleunigers durchgeführt. Diese Substanzen bewirken eine Beschleunigung des Reaktionsablaufs und eine Verringerung der erforderlichen Katalysatormenge. Als Folge dieser Zusätze entstehen außerdem hochmolekulare Polyisobutylene, da kettenabbrechende Einflüsse weniger wirksam werden. Es handelt sich hierbei vorzugsweise um primäre oder sekundäre Alkohole mit 1 bis 10 Kohlenstoffatomen, beispielsweise um Methanol, Ethanol, n-Propanol, iso-Propanol, n-Butanol, iso-Butanol, Amylalkohole, Cyclohexanol und Benzylalkohol. In Betracht kommen außerdem Phenole, Carbonsäuren oder Mineralsäuren.

Nach bekannten Verfahren wird das bei der Polymerisation verdampfte Lösungsmittel kontinuierlich abgezogen, verflüssigt und in flüssigem Zustand erneut der Polymerisationszone zugeführt (vgl. EP-A-0 025 530 und EP-A-0 036 974).

Dem Isobutylen können vor oder während der Polymerisation übliche Additive, wie Stabilisatoren, Regler, Farbstoffe und dergleichen einverleibt werden. Diese können aber auch den Polyisobutylenen nach der Polymerisation zugemischt werden. Die Stabilisatoren werden im allgemeinen in Mengen von 0,01 bis 2,0, vorzugsweise von 0,05 bis 0,25 Gew.-%, bezogen auf das Gewicht des Polyisobutylens, verwendet. Als Stabilisatoren kommen alle für die Stabilisierung von Polyisobutylen üblichen Verbindungen in Betracht. Geeignet sind beispielsweise phenolische Antioxidantien, wie 2,6-Di-tert.-butyl-p-kresol, tert.-Amylphenolsulfid und tert.-Amylphenoldisulfid. Weiterhin sind Stoffe, die Amin-, Sulfid- oder aromatische Hydroxylgruppen enthalten, z.B. Di-(2-oxy-5-butylphenyl)sulfid oder -disulfid, Phenyl-β-naphthylamin, Polyvinylethylsulfid oder Polyvinylbutylsulfid geeignet.

Erfindungsgemäß wird als Molekulargewichtsregler 0,001 bis 0,30 Gew.%, bezogen auf das eingesetzte Isobutylen, 2,4,4-Trimethylpenten-1 eingesetzt, das weniger als 1,0, bevorzugt 0,5 Gew.% Fremdbestandteile enthält. Unter Fremdbestandteile werden hierbei insbesondere die Isomeren des 2,4,4-Trimethylpentens-1, wie 2,4,4-Trimethylpenten-2, 3,4,4-Trimethylpenten-2 und 2,3,4-Trimethylpenten-3, verstanden, welche im technischen Produkt Diisobuten enthalten sind. Insbesondere bevorzugt ist ein Verfahren zur Polymerisation von Isobutylen, bei dem ein sorgfältig gereinigtes 2,4,4-Trimethylpenten-1 mit einem Reinheitsgrad von mindestens 99,5 Gew.% eingesetzt wird.

Die Herstellung des technischen Produkts Diisobuten erfolgt dadurch, daß man Isobuten oder isobutenhaltige Gasgemische selektiv in Schwefelsäure absorbiert und die Lösung erhitzt. Dabei bilden sich 80 Gew.% Di- und 20 Gew.% Triisobuten, die durch Destillation getrennt werden können (vgl. die zitierte Publikation von H. Güterbock, Seiten 64 bis 76). Das so gewonnene Diisobuten besteht aus einem Gemisch von 72 Gew.% 2,4,4-Trimethylpenten-1, 19 Gew.% 2,4,4-Triemthylpenten-2, 5 Gew.% 3,4,4-Trimethylpenten-2 und 4 Gew.% 2,3,4-Trimethylpenten-3, welche durch Destillation getrennt werden können. Vorgenannte Verbindungen sind als Reinsubstanzen auf dem Markt erhältlich. Es zeigte sich überraschend, daß nur der Hauptbestandteil des Diisobutens, 2,4,4-Trimethylpenten-1, das Molgewicht der Isobutenpolymerisation regelt.

Die mit der Erfindung erzielbaren Vorteile sind insbesondere darin zu sehen, daß der Einsatz der Reinsubstanz 2,4,4-Trimethylpentan-1 wesentlich das Polymerisationsverhalten des Isobutylens, wie ruhiger Polymerisationsverlauf, reduzierte Katalysator- und Reglerkonzentration, verbessert, was ingesamt zu einer geringen Vergiftung des im Kreislauf geführten Gases führt.

Das erfindungsgemäße Verfahren wird anhand der folgenden Beispiele näher erläutert. Die in den Beispielen angegebenen Molekulargewichte wurden nach Staudinger ermittelt. Um den Stand der Technik zu zeigen, wurde ein technisches Diisobuten gemäß der obigen Zusammensetzung benutzt. Um zu zeigen, daß die im technischen Diisobuten enthaltenen Bestandteile 2,4,4-Trimethylpentenpenten-2, 3,4,4-Trimethylpenten-2 und 2,3,4-Trimethylpenten-2 die Isobutenpolymerisation nicht regeln, wurden die auf dem Markt erhältlichen jeweiligen Reinsubstanzen verwandt.

Vergleichsbeispiele 1 bis 6

A) Polymerisationslösung
Unter Ausschluß von Feuchtigkeit mischt man bei einer Temperatur von -7 °C 12 g reines, getrocknetes, flüssiges Isobuten mit 1000 Gew.-ppm Isobutanol, die in der Tabelle angegebenen Mengen an Diisobuten, bezogen auf das eingesetzte Isobuten und 23 g reines, getrocknetes, flüssiges Ethen von -104 °C.
B) Katalysatorlösung
100 mg Bortrifluorid (Reinheit 99,75 Vol.-%) werden in 23 g reinem, getrocknetem, flüssigen Ethen von -104 °C gelöst.
Die Katalysatorlösung wird der Polymerisationslösung zuaddiert. Die Reaktion verläuft unter Aufsieden und Verdampfen des Ethens und ist nach den in der Tabelle angegebenen Reaktionszeiten beendet.

| Vergleichs-beispiel | Diisobuten (Gew.-ppm) | Reaktions-zeit (s) | Molekularge-wicht x 1000 | Standardabweichung ± S x 1000 |
|---|---|---|---|---|
| 1 | 0 | 5 | 260 | 20 |
| 2 | 10 | 9 | 240 | 15 |
| 3 | 100 | 20 | 160 | 12 |
| 4 | 500 | 35 | 100 | 10 |
| 5 | 1000 | 45 | 80 | 8 |
| 6 | 2500 | 65 | 45 | 5 |

Wie die Vergleichsbeispiele zeigen, hängt die Reaktionszeit sehr stark von der zugesetzten Menge an Diisobuten ab. Die Standardabweichung (5) der jeweils erhaltenen Polyisobutene liegt je nach Molgewicht zwischen 5000 und 20000. Die Polymerisation zeigt Spritzneigung.

Vergleichsbeispiele 7 bis 9
(Nebenbestandteile des technischen Produktes Diisobuten)

Man verführt wie in Vergleichsbeispiel 1 beschrieben nur mit dem Unterschied, daß in der Polymerisationslösung anstelle des Diisobutens jeweils 100 Gew.-ppm der nachfolgend angegebenen Nebenbestandteile des technischen Diisobutens gelöst wurden.

| Vergleichsbeispiel | Nebenbestandteile 100 Gew.-ppm | Reaktionszeit (s) | Molekulargewicht x 1000 | ± S x 1000 |
| --- | --- | --- | --- | --- |
| 7 | 2,4,4-Trimethylpenten-2 | 3 | 262 | 20 |
| 8 | 3,4,4-Trimethylpenten-2 | 4 | 260 | 20 |
| 9 | 2,3,4-Trimethylpenten-3 | 3 | 261 | 20 |

Wie die Vergleichsbeispiele zeigen, regeln die Nebenbestandteile die Isobutenpolymerisation nicht. Es wird eine Reaktionsbeschleunigung unter vermehrter Spritzneigung festgestellt. Die Standardabweichung liegt bei 20000.

Beispiele 1 bis 5

Man verfährt wie in Vergleichsbeispiel 1 beschrieben nur mit dem Unterschied, daß in der Polymerisationslösung anstelle des Diisobutens die in der Tabelle angegebenen Mengen an 2,4,4-Trimethylpenten-1, bezogen auf das eingesetzte Isobuten, gelöst wurden.

| Beispiel | 2,4,4-Trimethyl--1-penten (Gew.-ppm) | Reaktionszeit (s) | Molekulargewicht x 1000 | ± S x 1000 |
| --- | --- | --- | --- | --- |
| 1 | 10 | 6 | 250 | 3 |
| 2 | 100 | 8 | 180 | 2 |
| 3 | 500 | 10 | 100 | 2 |
| 4 | 1000 | 14 | 60 | 1 |
| 5 | 2500 | 20 | 40 | 1 |

Wie die Beispiele zeigen, regelt 2,4,4-Trimethylpenten-1, je nach Zusatzmenge, das Molekulargewicht in etwa nur einem Drittel der bei Diisobuten benötigten Reaktionszeit bei geringer Standardabweichung des Molekulargewichtes. Die Polymerisation verläuft ruhig und ohne Spritzneigung.

## Ansprüche

1. Verfahren zur Herstellung von Polyisobutylen durch Polymerisation von Isobutylen in einer Polymerizationszone, in der die Siedetemperatur des inerten Lösungsmittels herrscht, in Gegenwart, jeweils bezogen auf das eingesetzte Isobutylen, von 0,01 bis 1,0 Gew.% Bortrifluoridkatalysator, der weniger als 0,3 Vol.% an Fremdbestandteilen enthält, eines Molekulargewichtsreglers, 30 bis 90 Gew.% des unter Reaktionsbedingungen inerten, niedrigsiedenden Lösungsmittels Ethylen und - gegebenenfalls - Polymerisationsbeschleuniger in Üblichen Mengen, wobei das bei der Polymerisation verdampfte Lösungsmittel kontinuierlich abgezogen, verflüssigt und im flüssigen Zustand erneut der Polymerisationszone zugefügt wird, dadurch gekennzeichnet , daß als Molekulargewichtsregler 0,001 bis 0,30 Gew.% 2,4,4-Trimethylpenten-1 eingesetzt wird, das weniger als 1,0 Gew.% Fremdbestandteile enthält.

2. Verfahren nach Anspruch 1, dadurch gekennzeichnet , daß das 2,4,4-Trimethylpenten-1 einen Reinheitsgrad von mindestens 99,5 Gew.% aufweist.

## Claims

1. A process for preparing polyisobutylene by polymerizing isobutylene in a polymerization zone in which the boiling point of the inert solvent prevails, in the presence, in each case based on the isobutylene employed, of from 0.01 to 1.0% by weight of boron trifluoride catalyst containing less than 0.3% by volume of foreign constituents, a molecular weight regulator, from 30 to 90% by weight of the low-boiling solvent which is inert under the reaction conditions, ethylene and, if desired, a polymerization accelerator in conventional amounts, the solvent evaporated during the polymerization being continuously removed, condensed and fed back into the polymerization zone in the liquid state, wherein the molecular weight regulator employed is from 0.001 to 0.30% by weight of 2,4,4-trimethyl-1-pentene containing less than 1.0% by weight of foreign constituents.

2. A process as claimed in claim 1, wherein the 2,4,4-trimethyl-1-pentene has a degree of purity of at least 99.5% by weight.

## Revendications

1. Procédé de préparation de polyisobutylène par polymérisation d'isobutylène dans une zone de polymérisation dans laquelle règne la température d'ébullition du solvant inerte, en présence - chaque fois par rapport à l'isobutylène mis en réaction - de 0,01 à 1,0% en poids d'un catalyseur de trifluorure de bore qui contient moins de 0,3% en volume de constituants étrangers, d'un régulateur de poids moléculaire, de 30 à 90% en poids du solvant de bas poids d'ébullition éthylène, inerte dans les conditions de la réaction et - éventuellement - d'accélérateurs de polymérisation dans les quantités usuelles, le solvant évaporé au cours de la réaction étant extrait de façon continue, liquéfié et réintroduit dans la zone de réaction à l'état liquide, caractérisé en ce qu'on utilise, comme régulateur de poids moléculaire, de 0,001 à 0,30% en poids de 2,4,4-triméthylpentène-1 qui contient moins de 1,0% en poids de constituants étrangers.

2. Procédé selon la revendication 1, caractérisé en ce que le 2,4,4-triméthylpentène-1 présente un degré de pureté d'au moins 99,5% en poids.